# EUROPEAN PATENT SPECIFICATION

(11) **EP 2 840 366 B1**
(45) Date of publication and mention of the grant of the patent: **20.01.2021**
(21) Application number: 14181235.4
(22) Date of filing: 18.08.2014
(51) Int. Cl.: G01F 23/26

(54) **Liquid level sensing systems**
Flüssigkeitsstandmesssysteme
Système de détection de niveau de liquide

(30) Priority: 21.08.2013 US 201361868412 P; 27.06.2014 US 201414318181
(43) Date of publication of application: 25.02.2015
(73) Proprietor: Goodrich Corporation, Charlotte, NC 28217 (US)
(72) Inventor: Periyathamby, Sabeshan S, Wadsworth, OH 44281 (US); Shearer, Jon, Hartville, OH 44632 (US); Lei, Martin, Canal Fulton, OH 44614 (US); Harr, John A, Minerva, OH 44657 (US); Mackulin, Bryan J, Akron, OH 44333 (US)
(74) Representative: Dehns

(56) References cited:
- EP-A1- 2 515 090
- EP-A1- 2 626 675
- DE-A1- 3 504 493
- DE-A1-102010 030 362
- US-A- 5 315 872
- US-A1- 2004 070 408

## Description

### BACKGROUND OF THE INVENTION

### 1. Field of the Invention

The present disclosure relates to liquid level sensing systems, and more particularly to liquid level sensing systems for potable water tanks.

### 2. Description of Related Art

Traditional liquid level sensing technology involves point level sensors to determine the level of a liquid in a vessel. This tends to cause corrosion of the sensor due to direct contact with the liquid. Placing the sensor inside the vessel can also pose mechanical obstruction issues with internal baffling. Traditional point level sensors also include protrusions that present challenges to fitting the vessel into the limited space typically allotted for some installations, such as aircraft installations.

Such conventional methods and systems have generally been considered satisfactory for their intended purpose. However, there still remains a need in the art for liquid level sensing systems with increased reliability, durability and ease of installation. The present disclosure provides a solution for this need.

EP 2626675 A1 discloses a linear liquid level sensing system.

### SUMMARY OF THE INVENTION

A potable water liquid level sensing system includes a vessel for storing potable water and a single plate electrode. The vessel includes a dielectric vessel wall separating a vessel interior from a vessel exterior. The electrode is mounted to an exterior side of the vessel wall spanning a distance corresponding to a desired-level-determining range. The vessel wall is a dielectric gap between the electrode and the vessel interior. The electrode is configured to collect a charge corresponding to a liquid level.

In accordance with certain embodiments, capacitance detection circuitry can be operatively connected to the electrode. The capacitance detection circuitry can be configured to sense the collected charge on the electrode. An electrical line can connect the electrode to the capacitance detection circuitry. The capacitance detection circuitry can be operatively connected to a liquid level determination component for determining a liquid level based on capacitance by correlating the collected charge to an area of a dielectric material in contact with the liquid. The vessel wall can include a curved surface. The electrode, the capacitance detection circuitry and/or the liquid level determination component can be configured to remove nonlinearity effects on a liquid level measurement due to the curved surface.

The vessel can include a top and a bottom, wherein a vessel axis is defined therebetween. The desired-level-determining range can extend along an axis parallel to the vessel axis. A voltage-supply source can be operatively connected to the electrode for supplying a voltage to the electrode. An electrical line can connect the electrode to a voltage-supply source. The vessel can include an insulating material. The insulating material can be plastic. The vessel can be a tank installed on an aircraft.

A method for determining a potable water liquid level in a vessel, the vessel including a dielectric vessel wall, includes collecting a charge on a single plate electrode mounted to an exterior side of the vessel, sensing the collected charge on the electrode with a capacitance sensor through an electrical line, and determining a liquid level in a vessel based on the collected charge sensed by the capacitance sensor. The method can also include supplying a voltage to the electrode with a voltage supply source such that the electrode can collect the charge. Determining a liquid level can include correlating the collected charge to an area of a dielectric material in contact with liquid disposed in the vessel. The vessel can include the dielectric material and the liquid can act as one plate of a capacitor while the electrode can act as a second plate of the capacitor. Sensing
the collected charge on the electrode can include sensing a continuous analog signal emitted by the electrode.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below, by way of example only, and with reference to certain figures, wherein:
Fig. 1 is a perspective view of an exemplary embodiment of a vessel with a non-invasive single probe liquid level sensing system constructed in accordance with the present disclosure showing an electrode, a vessel, capacitance detection circuitry and a liquid level determination component;
Fig. 2 is a perspective view of an exemplary embodiment of a vessel with a non-invasive single probe liquid level sensing system constructed in accordance with the present disclosure showing a vessel with a curved surface; and
Fig. 3 is a flow chart of an exemplary method for determining a liquid level in a vessel in accordance with the invention, showing operations for determining a liquid level in the vessel based on the collected charge on an electrode.

### DETAILED DESCRIPTION OF THE PREFERRED EMBODIMENTS

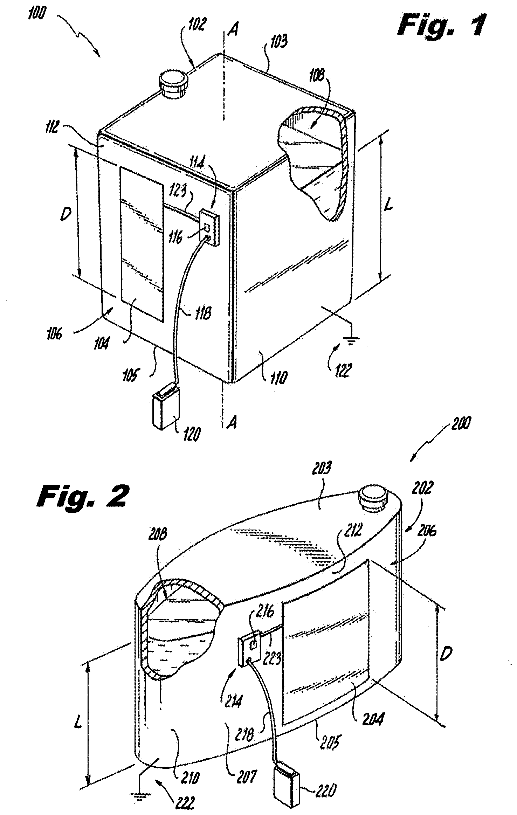

Reference will now be made to the drawings wherein like reference numerals identify similar structural features or aspects of the subject disclosure. For purposes of explanation and illustration, and not limitation, a perspective view of an exemplary embodiment of liquid level sensing system in accordance with the disclosure is shown in Fig. 1 and is designated generally by reference character 100. Other embodiments of liquid level sensing systems in accordance with the disclosure, or aspects thereof, are provided in Figs. 2-3, as will be described. The systems and methods described herein can be used to improve ease of installation and to reduce corrosion as compared to traditional liquid level sensing systems.

As shown in Fig. 1, a non-invasive single probe liquid level sensing system 100 includes a vessel 102 and an electrode 104. Vessel 102 includes a vessel wall 106 separating a vessel interior 108 from a vessel exterior 110. Vessel wall 106 is a dielectric gap between electrode 104 and vessel interior 108. Electrode 104 is mounted to an exterior side 112 of vessel wall 106 spanning a distance D corresponding to a desired-level-determining range. Those skilled in the art will readily appreciate that electrode 104 can be made out of any suitable metal, such as copper. Those skilled in the art will readily appreciate that by mounting electrode 104 to vessel exterior 110, electrode 104 is removed from potential contact with liquid within the vessel interior 108, thereby reducing corrosion issues due to electrode 104 contact with liquid. Further, the direct application of electrode 104 to exterior side 112 of vessel wall 106 tends to result in a very compact, smooth and uninterrupted design. Those skilled in the art will readily appreciate that this compact, smooth and uninterrupted design can increase the ease of installation and manufacture.

Vessel 102 includes a top 103 and a bottom 105, wherein a vessel axis A is defined therebetween. Desired-level-determining range D extends along electrode 104 parallel to vessel axis A. Vessel 102 is made out of an insulating material, e.g. a dielectric material, to act as a dielectric between electrode 104 and vessel interior 108. Those skilled in the art will readily appreciate that the insulating material can be plastic, and/or any other suitable non-metallic material. Those skilled in the art will also readily appreciate that vessel 102 can be a tank installed on an aircraft, or can be used in a variety of suitable applications.

With continued reference to Fig. 1, an electrical line 123 connects electrode 104 to capacitance detection circuitry 114. Electrical line 118 connects capacitance detection circuitry 114 to a voltage-supply source 120. To determine a liquid level L within vessel 102, voltage supply source 120 supplies a voltage to electrode 104. Electrode 104 is configured to collect a charge corresponding to liquid level L. For example, the charge collected on electrode 104 corresponds to the area of the insulation, e.g. area of vessel 102 between electrode 104 and contact with liquid. Capacitance detection circuitry 114 senses the collected charge on electrode 104 though electrical line 123. Those skilled in the art will readily appreciate that there can be any number of suitable electrical lines, e.g. electrical lines 118 or 123, connecting electrode 104 to voltage supply source 120, and/or to capacitance detection circuitry 114.

Capacitance detection circuitry 114 is operatively connected to a liquid level determination component 116 for determining the liquid level L based on the collected charge sensed by capacitance detection circuitry 114. Those skilled in the art will readily appreciate that liquid level sensing system 100 allows for a continuous analog signal, which correlates to the liquid level in vessel 102. Those skilled in the art will also readily appreciate that a continuous analog signal can allow for infinite resolution of water level as compared with traditional point source level sensing systems. Electrode 104 acts as one plate of a capacitor, while liquid disposed within vessel interior 108 acts as the second plate. As liquid level L increases, a greater portion of distance D corresponding to a desired-level-determining range of electrode 104 is indirectly covered with liquid, increasing the capacitance. Determining capacitance can therefore allow for a determination of liquid level L. It is contemplated that the liquid can have an electrical ground 122. The circuitry, e.g. liquid level determination component 116 and capacitance detection circuitry 114, can reside on a circuit card which is less than one square inch and operates on 28VDC aircraft power.

As shown in Fig. 2, a non-invasive single probe liquid level sensing system 200 is similar to liquid level sensing system 100, described above. Liquid level sensing system 200 includes a vessel 202 having a vessel wall 206 with a curved surface 207. Those skilled in the art will readily appreciate that an electrode 204, capacitance detection circuitry 214, and/or a liquid level determination component 216 can be configured to remove nonlinearity effects on a liquid level measurement due to curved surface 207, or any other non-linear surface of vessel 202.

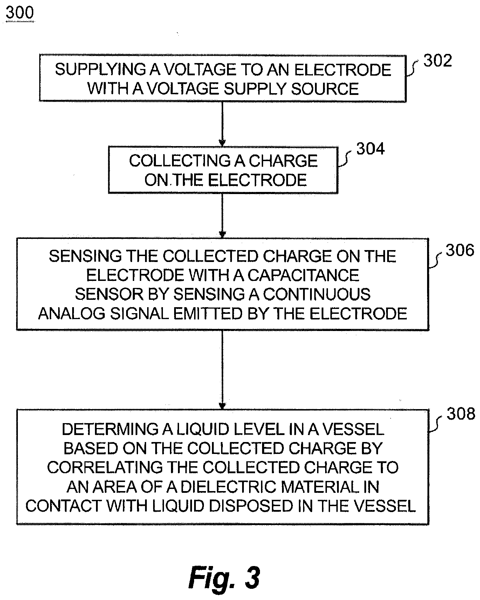

Now with reference to Fig. 3, a method 300 for determining a liquid level, e.g. liquid level L, in a vessel, e.g. vessel 102, includes operations 302, 304, 306 and 308. Operation 302 includes supplying a voltage to an electrode, e.g. electrode 104, with a voltage supply source, e.g. voltage supply source 120. Operation 304 includes collecting a charge on the electrode. Operation 306 includes sensing the collected charge on the electrode with a capacitance sensor, e.g. capacitance detection circuitry 114, through an electrical line, e.g. electrical line 123. Operation 306 includes sensing a continuous analog signal, as described above, emitted by the electrode.

With continued reference to Fig. 3, operation 308 includes determining the liquid level in the vessel based on the collected charge sensed by the capacitance sensor. Operation 308 includes correlating the collected charge to an area of a dielectric material in contact with the liquid disposed in the vessel. The vessel can include the dielectric material and the liquid can act as one plate of a capacitor while the electrode can act as a second plate of the capacitor, as described above.

The methods and systems of the present disclosure, as described above and shown in the drawings, provide for liquid level sensing systems with superior properties including reduced corrosion, and improved ease of manufacture and installation. While the apparatus and methods of the subject disclosure have been shown and described with reference to preferred embodiments, those skilled in the art will readily appreciate that changes and/or modifications may be made thereto without departing from the scope of the subject disclosure as defined by the claims.

## Claims

1. A potable water liquid level sensing system (100) comprising:
a vessel (102) for storing potable water, including a dielectric vessel wall (106) separating a vessel interior (108) from a vessel exterior (110); and
an electrode (104) mounted to an exterior side (112) of the vessel wall spanning a distance (D) corresponding to a desired-level-determining range, wherein the electrode is configured to collect a charge corresponding to a liquid level (L), **characterized in that** the electrode (104) is a single plate electrode, and **in that** the vessel wall is the dielectric gap between the electrode and the vessel interior.

2. A liquid level sensing system as recited in Claim 1, further comprising capacitance detection circuitry (114) operatively connected to the electrode, wherein the capacitance detection circuitry is configured to sense the collected charge on the electrode.

3. A liquid level sensing system as recited in Claim 2, further comprising an electrical line connecting the electrode to the capacitance detection circuitry.

4. A liquid level sensing system as recited in Claim 2, wherein the capacitance detection circuitry is operatively connected to a liquid level determination component (116) for determining a liquid level based on capacitance by correlating the collected charge to an area of a dielectric material in contact with the liquid.

5. A liquid level sensing system as recited in Claim 4, wherein the vessel wall includes a curved surface, wherein at least one of the electrode, the capacitance detection circuitry and the liquid level determination component are configured to remove nonlinearity effects on a liquid level measurement due to the curved surface.

6. A liquid level sensing system as recited in any preceding Claim, wherein the vessel includes a top and a bottom, wherein a vessel axis is defined therebetween, and wherein the desired-level-determining range extends along an axis parallel to the vessel axis.

7. A liquid level sensing system as recited in any preceding Claim, further comprising a voltage-supply source (120) operatively connected to the electrode for supplying a voltage to the electrode.

8. A liquid level sensing system as recited in any preceding Claim, further comprising an electrical line (118) connecting the electrode to a voltage-supply source.

9. A liquid level sensing system as recited in any preceding Claim, wherein the vessel includes an insulating material.

10. A liquid level sensing system as recited in Claim 9, wherein the insulating material includes a plastic material.

11. A liquid level sensing system as recited in any preceding Claim, wherein the vessel is a tank installed on an aircraft.

12. A method for determining a potable water liquid level in a vessel, the vessel for storing potable water including a dielectric vessel wall (106) separating a vessel interior (108) from a vessel exterior (110);
collecting a charge (304) on an electrode (104) mounted to an exterior side of the vessel spanning a distance (D) corresponding to a desired-level-determining range, ;
sensing the collected charge (306) on the electrode with a capacitance sensor (114) through an electrical line (118); and
determining a liquid level (308) in the vessel (102) based on the collected charge sensed by the capacitance sensor,
**characterized in that** the electrode is a single plate electrode, and **in that** the vessel wall is the dielectric gap between the electrode and the vessel interior.

13. A method as recited in claim 12, further comprising supplying a voltage (302) to the electrode with a voltage supply source such that the electrode can collect the charge.

14. A method as recited in claim 12 or 13, wherein determining a liquid level includes correlating the collected charge to an area of a dielectric material in contact with liquid disposed in the vessel, wherein the vessel includes the dielectric material, and wherein the liquid acts as one plate of a capacitor and the electrode acts as a second plate of the capacitor.

15. A method as recited in claim 12, 13 or 14, wherein sensing the collected charge on the electrode includes sensing a continuous analog signal emitted by the electrode.

## Patentansprüche

1. Flüssigkeitsstandmesssystem (100) für Trinkwasser, umfassend:
einen Behälter (102) zum Speichern von Trinkwasser, der eine dielektrische Behälterwand (106) beinhaltet, die ein Behälterinneres (108) von einem Behälteräußeren (110) trennt; und
eine Elektrode (104), die an einer Außenseite (112) der Behälterwand montiert ist und einen Abstand (distance - D) überspannt, der einem erwünschten Standermittlungsbereich entspricht, wobei die Elektrode so konfiguriert ist, dass sie eine Ladung sammelt, die einem Flüssigkeitsstand (level - L) entspricht, **dadurch gekennzeichnet, dass** die Elektrode (104) eine Einplattenelektrode ist, und dadurch, dass die Behälterwand der dielektrische Spalt zwischen der Elektrode und dem Behälterinneren ist.

2. Flüssigkeitsstandmesssystem nach Anspruch 1, ferner eine Kapazitätserkennungsschaltung (114) umfassend, die wirksam mit der Elektrode verbunden ist, wobei die Kapazitätserkennungsschaltung so konfiguriert ist, dass sie die gesammelte Ladung an der Elektrode erfasst.

3. Flüssigkeitsstandmesssystem nach Anspruch 2, ferner eine elektrische Leitung umfassend, die die Elektrode mit der Kapazitätserkennungsschaltung verbindet.

4. Flüssigkeitsstandmesssystem nach Anspruch 2, wobei die Kapazitätserkennungsschaltung wirksam mit einem Flüssigkeitsstandermittlungsbauteil (116) zum Ermitteln eines Flüssigkeitsstands basierend auf der Kapazität durch Korrelieren der gesammelten Ladung mit einer Fläche eines dielektrischen Materials, die in Kontakt mit der Flüssigkeit ist, verbunden ist.

5. Flüssigkeitsstandmesssystem nach Anspruch 4, wobei die Behälterwand eine gekrümmte Fläche beinhaltet, wobei mindestens eines aus der Elektrode, der Kapazitätserkennungsschaltung und dem Flüssigkeitsstandermittlungsbauteil so konfiguriert sind, dass sie nichtlineare Effekte auf eine Flüssigkeitsstandmessung aufgrund der gekrümmten Fläche entfernen.

6. Flüssigkeitsstandmesssystem nach einem der vorstehenden Ansprüche, wobei der Behälter eine Oberseite und einen Boden beinhaltet, wobei eine Behälterachse dazwischen definiert ist, und wobei sich der erwünschte Standermittlungsbereich entlang einer Achse, die parallel zur Behälterachse ist, erstreckt.

7. Flüssigkeitsstandmesssystem nach einem der vorstehenden Ansprüche, ferner eine Spannungsversorgungsquelle (120) umfassend, die wirksam mit der Elektrode zum Versorgen der Elektrode mit Spannung verbunden ist.

8. Flüssigkeitsstandmesssystem nach einem der vorstehenden Ansprüche, ferner eine elektrische Leitung (118) umfassend, die die Elektrode mit einer Spannungsversorgungsquelle verbindet.

9. Flüssigkeitsstandmesssystem nach einem der vorstehenden Ansprüche, wobei der Behälter ein isolierendes Material beinhaltet.

10. Flüssigkeitsstandmesssystem nach Anspruch 9, wobei das isolierende Material ein Kunststoffmaterial beinhaltet.

11. Flüssigkeitsstandmesssystem nach einem der vorstehenden Ansprüche, wobei der Behälter ein Tank ist, der in einem Luftfahrzeug eingebaut ist.

12. Verfahren zum Ermitteln eines Flüssigkeitsstands von Trinkwasser in einem Behälter, wobei der Behälter zum Speichern von Trinkwasser eine dielektrische Behälterwand (106) beinhaltet, die ein Behälterinneres (108) von einem Behälteräußeren (110) trennt;
Sammeln einer Ladung (304) an einer Elektrode (104), die an einer Außenseite (112) des Behälters montiert ist und einen Abstand (D) überspannt, der einem erwünschten Standermittlungsbereich entspricht;
Erfassen der gesammelten Ladung (306) an der Elektrode mit einem Kapazitätssensor (114) über eine elektrische Leitung (118); und Ermitteln eines Flüssigkeitsstands (308) in dem Behälter (102) basierend auf der gesammelten Ladung, die von dem Kapazitätssensor erfasst wurde,
**dadurch gekennzeichnet, dass** die Elektrode eine Einplattenelektrode ist, und dadurch, dass die Behälterwand der dielektrische Spalt zwischen der Elektrode und dem Behälterinneren ist.

13. Verfahren nach Anspruch 12, ferner das Liefern einer Spannung (302) zur Elektrode mit einer Spannungsversorgungsquelle, so dass die Elektrode die Ladung sammeln kann, umfassend.

14. Verfahren nach Anspruch 12 oder 13, wobei das Ermitteln eines Flüssigkeitsstands das Korrelieren der gesammelten Ladung mit einer Fläche eines dielektrischen Materials, die in Kontakt mit einer Flüssigkeit, die in dem Behälter angeordnet ist, steht, beinhaltet, wobei der Behälter das dielektrische Material beinhaltet und wobei die Flüssigkeit als eine Platte eines Kondensators fungiert und die Elektrode ans eine zweite Platte des Kondensators fungiert.

15. Verfahren nach Anspruch 12, 13 oder 14, wobei das Erfassen der gesammelten Ladung an der Elektrode das Erfassen eines analogen Dauersignals, das von der Elektrode ausgesendet wird, beinhaltet.

## Revendications

1. Système de détection de niveau de liquide d'eau potable (100) comprenant :
un récipient (102) pour stocker de l'eau potable, comportant une paroi de récipient diélectrique (106) séparant un intérieur de récipient (108) d'un extérieur de récipient (110) ; et
une électrode (104) montée sur un côté extérieur (112) de la paroi de récipient couvrant une distance (D) correspondant à une plage de détermination de niveau souhaité, dans lequel l'électrode est configurée pour collecter une charge correspondant à un niveau de liquide (L), **caractérisé en ce que** l'électrode (104) est une électrode à plaque unique, et **en ce que** la paroi de récipient est l'espace diélectrique entre l'électrode et l'intérieur de récipient.

2. Système de détection de niveau de liquide selon la revendication 1, comprenant en outre un circuit de détection de capacité (114) raccordé de manière opérationnelle à l'électrode, dans lequel le circuit de détection de capacité est configuré pour détecter la charge collectée sur l'électrode.

3. Système de détection de niveau de liquide selon la revendication 2, comprenant en outre une ligne électrique raccordant l'électrode au circuit de détection de capacité.

4. Système de détection de niveau de liquide selon la revendication 2, dans lequel le circuit de détection de capacité est raccordé de manière opérationnelle à un composant de détermination de niveau de liquide (116) pour déterminer un niveau de liquide sur la base de la capacité en corrélant la charge collectée avec une zone d'un matériau diélectrique en contact avec le liquide.

5. Système de détection de niveau de liquide selon la revendication 4, dans lequel la paroi de récipient comporte une surface incurvée, dans lequel au moins l'un parmi l'électrode, le circuit de détection de capacité et le composant de détermination de niveau de liquide est configuré pour supprimer des effets de non-linéarité sur une mesure de niveau de liquide en raison de la surface incurvée.

6. Système de détection de niveau de liquide selon une quelconque revendication précédente, dans lequel le récipient comporte un sommet et un fond, dans lequel un axe de récipient est défini entre eux, et dans lequel la plage de détermination de niveau souhaité s'étend le long d'un axe parallèle à l'axe de récipient.

7. Système de détection de niveau de liquide selon une quelconque revendication précédente, comprenant en outre une source d'alimentation en tension (120) raccordée de manière opérationnelle à l'électrode pour fournir une tension à l'électrode.

8. Système de détection de niveau de liquide selon une quelconque revendication précédente, comprenant en outre une ligne électrique (118) raccordant l'électrode à une source d'alimentation en tension.

9. Système de détection de niveau de liquide selon une quelconque revendication précédente, dans lequel le récipient comporte un matériau isolant.

10. Système de détection de niveau de liquide selon la revendication 9, dans lequel le matériau isolant comporte un matériau plastique.

11. Système de détection de niveau de liquide selon une quelconque revendication précédente, dans lequel le récipient est un réservoir installé sur un aéronef.

12. Procédé de détermination d'un niveau de liquide d'eau potable dans un récipient, le récipient servant à stocker de l'eau potable comportant une paroi de récipient diélectrique (106) séparant un intérieur de récipient (108) d'un extérieur de récipient (110) ;
la collecte d'une charge (304) sur une électrode (104) montée sur un côté extérieur du récipient couvrant une distance (D) correspondant à une plage de détermination de niveau souhaité ; la détection de la charge collectée (306) sur l'électrode avec un capteur de capacité (114) à travers une ligne électrique (118) ; et
la détermination d'un niveau de liquide (308) dans le récipient (102) sur la base de la charge collectée détectée par le capteur de capacité ;
**caractérisé en ce que** l'électrode est une électrode à plaque unique, et **en ce que** la paroi de récipient est l'espace diélectrique entre l'électrode et l'intérieur de récipient.

13. Procédé selon la revendication 12, comprenant en outre la fourniture d'une tension (302) à l'électrode avec une source d'alimentation en tension de sorte que l'électrode peut collecter la charge.

14. Procédé selon la revendication 12 ou 13, dans lequel la détermination d'un niveau de liquide comporte la corrélation de la charge collectée avec une zone d'un matériau diélectrique en contact avec un liquide disposé dans le récipient, dans lequel le récipient comporte le matériau diélectrique, et dans lequel le liquide agit comme une plaque d'un condensateur et l'électrode agit comme une seconde plaque du condensateur.

15. Procédé selon la revendication 12, 13 ou 14, dans lequel la détection de la charge collectée sur l'électrode comporte la détection d'un signal analogique continu émis par l'électrode.
